# EUROPEAN PATENT APPLICATION

(11) **EP 2 184 918 A2**
(43) Date of publication of application: **12.05.2010**
(21) Application number: 09174812.9
(22) Date of filing: 02.11.2009
(51) Int. Cl.: H04N 5/445, H04N 5/44, G06F 3/048

(54) **Broadcast display apparatus and control method thereof**

(30) Priority: 10.11.2008 KR 20080111126
(71) Applicant: SAMSUNG ELECTRONICS CO., LTD., Suwon-si Gyeonggi-do 442-742 (KR)
(72) Inventor: Kim, Yun-il, Seoul (KR); Lee, Si-hyung, Gyeonggi-do (KR)
(74) Representative: Robinson, Ian Michael

(57) **Abstract**

A broadcast display apparatus for simultaneously displaying a plurality of application windows and a control method thereof are provided. The broadcast display apparatus includes a display unit which simultaneously displays a plurality of application windows on a single screen, and a controller which controls a plurality of identifiers, assigned respectively to each of the plurality of application windows, to be displayed.

## Description

### CROSS-REFERENCE TO RELATED APPLICATIONS

This application claims priority from Korean Patent Application No. 10-2008-0111126, filed on November 10, 2008, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a broadcast display apparatus and controlling the broadcast display apparatus, and more particularly, to a broadcast display apparatus which simultaneously displays a plurality of application windows, and controlling the broadcast display apparatus.

### 2. Description of the Related Art

Televisions (TVs) are typically representative of video display apparatuses. TVs tune to broadcast signals transmitted from broadcasting stations according to user selection and display the tuned broadcast signals on screens. With the development of multimedia technologies, TVs have been gradually changing from analog types to digital types.

Particularly, digital type TVs provide various additional services, such as home shopping, electronic newspaper, stock market information, weather reports or games, which cannot be received through existing analog type TVs. Additionally, digital type TVs provide a large number of channels to receive broadcasts due to an efficient use of the bandwidth. Furthermore, digital type TVs have a picture-in-picture (PIP) function which enables a main screen to be overlapped by a sub-screen so that the main screen and sub-screen can be simultaneously displayed.

To provide the additional services described above, screens of digital type TVs have gradually increased in size, so as to simultaneously display a plurality of application objects on a single screen.

However, as the number of application objects displayed on a single screen increases, it becomes difficult or even impossible to rapidly move to an application object which a user desires to use.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a broadcast display apparatus which facilitates movement and selection of a plurality of application windows, and a method for controlling the broadcast display apparatus.

According to an aspect of the present invention, there is provided a broadcast display apparatus comprising a display unit which displays a plurality of application windows on a single screen, and a controller which controls a plurality of identifiers assigned to each of the plurality of application windows to be displayed.

The controller may adjust at least one of the size and position of the plurality of application windows and arrange the plurality of application windows on the screen according to a preset pattern.

The broadcast display apparatus may further comprise a remote control signal receiver which receives a remote control signal from a remote controller containing a plurality of keys. Each of the plurality of identifiers may be represented by at least one of a number and a letter which correspond to each of the plurality of keys.

The controller may adjust at least one of the size and position of the plurality of application windows and arrange the plurality of application windows on the screen according to a preset pattern upon occurrence of a preset event. The controller may rearrange each of the plurality of application windows to an original position, if at one of a predetermined time has elapsed and an application window is selected from among the plurality of application windows.

After arranging the plurality of application windows in the preset pattern, the controller may display a cursor on the plurality of arranged application windows so that a user is able to move the cursor in a desired direction.

The controller may control an application window indicated by the cursor to be displayed distinctively from other application windows among the plurality of application windows arranged in the preset pattern.

If at least one of a number key and a letter key on the remote controller is selected, the controller may recognize that an application window corresponding to the selected key is added as an identifier has been selected.

The controller may delete an identifier appearing on the selected application window, and control identifiers appearing on other non-selected application windows to remain on the screen.

The controller may magnify the selected application window, and adjust at least one of the position of non-selected application windows and a display position of each of the identifiers so that the identifiers on the non-selected application windows may not covered by the magnified application window.
The controller may control the plurality of identifiers to be displayed according to a display position of the plurality of application windows.

The controller may control the plurality of identifiers to be displayed on the plurality of application windows, if a specific key on the remote controller is selected.

The plurality of application windows may be widget windows.

According to another aspect of the present invention, there is provided a method for controlling a broadcast display apparatus, the method comprising displaying a plurality of application windows on a single screen, and displaying a plurality of identifiers assigned to each of the plurality of application windows.

The method may further comprise adjusting at least one of the size and position of the plurality of application windows and arranging the plurality of application windows on the screen according to a preset pattern.

The method may further comprise receiving a remote control signal from a remote controller containing a plurality of keys. Each of the plurality of identifiers may be represented by at least one of a number and a letter which correspond to each of the plurality of keys.

The method may further comprise adjusting at least one of the size and position of the plurality of application windows and arranging the plurality of application windows on the screen according to a preset pattern upon occurrence of a preset event; and rearranging each of the plurality of application windows to an original position, if one of a predetermined time has elapsed and an application window is selected from among the plurality of application windows.

The method may further comprise, after arranging the plurality of application windows in the preset pattern, displaying a cursor on the plurality of arranged application windows so that a user is able to move the cursor in a desired direction.

The method may further comprise displaying an application window indicated by the cursor distinctively from other application windows among the plurality of application windows arranged in the preset pattern.

The method may further comprise, if at least one of a number key and a letter key on the remote controller is selected, recognizing that an application window corresponding to the selected key is added as an identifier has been selected.

The method may further comprise deleting an identifier appearing on the selected application window, and retaining identifiers appearing on other non-selected application windows.

The method may further comprise magnifying the selected application window, and adjusting at least one of the position of non-selected application windows and a display position of each of the identifiers so that the identifiers on the non-selected application windows are not covered by the magnified application window.

The displaying of the plurality of identifiers may comprise displaying the plurality of identifiers according to a display position of the plurality of application windows.

The displaying of the plurality of identifiers may comprise displaying the plurality of identifiers assigned to the plurality of application windows, if a specific key on the remote controller is selected.

The plurality of application windows may be widget windows.

Therefore, it may be possible for a user to easily select or move a desired application window from among a plurality of application windows simultaneously displayed on a single screen.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram of a broadcast display apparatus according to an exemplary embodiment of the present invention;
FIG. 2 is an exemplary block diagram of a broadcast display apparatus capable of controlling display of application windows using a remote controller;
FIG. 3 is a detailed block diagram of a broadcast display apparatus shown in FIG. 2 according to another exemplary embodiment of the present invention;
FIG. 4 exemplarily illustrates a remote controller according to an exemplary embodiment of the present invention;
FIGS. 5A to 5C are views explaining various display patterns to be initially displayed on a display screen according to an exemplary embodiment of the present invention;
FIGS. 6A to 6E are views explaining various display patterns to be provided upon occurrence of a preset event according to an exemplary embodiment of the present invention;
FIGS. 7A to 7C are views explaining display patterns according to another exemplary embodiment of the present invention;
FIG. 8 is a flowchart explaining a method for controlling a broadcast display apparatus according to an exemplary embodiment of the present invention; and
FIG. 9 is a flowchart explaining a method for controlling a broadcast display apparatus according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the present invention. Thus, it is apparent that the exemplary embodiments of the present invention can be carried out without those specifically defined matters. Also, well-known functions or constructions are not described in detail since they would obscure the present invention with unnecessary detail.

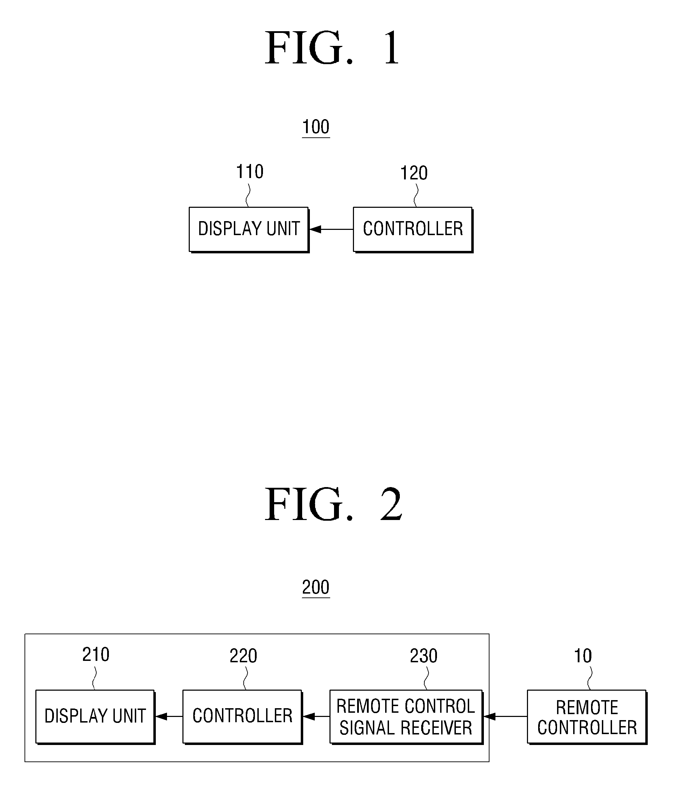

FIG. 1 is a block diagram of a broadcast display apparatus 100 according to an exemplary embodiment of the present invention. The broadcast display apparatus 100 of FIG. 1 comprises a display unit 110 and a controller 120.

The broadcast display apparatus 100 has a function of displaying various video signals, in particular a broadcast signal received from an external source. The broadcast display apparatus 100 may be implemented as a digital television (DTV), or a compact disc (CD) player, a hard disk drive (HDD) player, a player in which a memory card is detachably mounted, a digital camera, a digital camcorder, a mobile phone, a personal digital assistant (PDA), a set-top box (STB) and a composite display apparatus configured by selectively combining functions of the above apparatuses.

The display unit 110 simultaneously displays a plurality of currently open application windows on a single screen. The display unit 110 may be implemented as a digital light processing (DLP), a liquid crystal display (LCD) or a plasma display panel (PDP).

The plurality of application windows may take the form of widgets (or gadgets). Widgets (or gadgets) refer to simple software means which activate an application program on a computer operating system (OS) and then display the application program as a small user interface. In other words, widgets (or gadgets) may be elements of graphic interfaces which enable users to interact with a program provided by the broadcast display apparatus 100. Widgets may include, for example, accessory widgets such as a clock, a calculator, a memo pad or a calendar, and functional widgets which enables a user to check a variety of Internet information frequently required by the user (for example, weather reports, stock market information, exchange rate information, news or games) directly without the need to operate a web browser. Additionally, the plurality of application windows may take the form of tickers, which display information on the bottom of the display unit 110 even when a user stops viewing a related program.

The controller 120 controls the overall operations of the broadcast display apparatus 100. In more detail, the controller 120 controls the display unit 110 to display a plurality of identifiers corresponding to each of the plurality of application windows, upon occurrence of a preset event. Here, each of the plurality of identifiers may be represented by at least one of a number and a letter, and may be respectively assigned to the plurality of application windows according to a display position of the plurality of application windows. For example, if the plurality of identifiers are represented by numbers, numbers may be assigned to each of the plurality of application windows either clockwise or counterclockwise.

The controller 120 may control the display unit 110 to display the plurality of currently open application windows in a display pattern which enables a user to conveniently select one of the plurality of currently open application windows (for example, a horizontal display pattern or a vertical display pattern), upon occurrence of an event. In this situation, a user may conveniently select a desired application window using keys included in a main body of the broadcast display apparatus 100 or keys included in a remote controller (not shown). Here, the display pattern of application windows may be changed while the plurality of identifiers are displayed, or after a predetermined time has elapsed after the plurality of identifiers are displayed.

Various events may occur, for example when a specific key (for example, a widget selection key) on the main body of the broadcast display apparatus 100 or on the remote controller is pressed; when a preset period arrives; or when a predetermined time has not elapsed after the broadcast display apparatus 100 is powered on.

The plurality of identifiers corresponding to each of the plurality of application windows may be selected using keys on the main body of the broadcast display apparatus 100 or using keys on the remote controller. However, the number of keys on the main body of the broadcast display apparatus 100 has gradually decreased in recent years, and instead the remote controller contains number keys or letter keys for the controlling operation, taking into consideration the design.

FIG. 2 is an exemplary block diagram of a broadcast display apparatus 200 capable of controlling display of a plurality of application windows using a remote controller 10.
The broadcast display apparatus 200 of FIG. 2 comprises a display unit 210, a controller 220 and a remote control signal receiver 230. The display unit 210 and controller 220 of FIG. 2 are configured similarly to the display unit 110 and controller 120 of FIG. 1, so no further description is herein provided.

The display unit 210 displays a plurality of currently open application windows on a single screen.

The controller 220 controls the display unit 210 to display a plurality of identifiers corresponding to each of the plurality of application windows, upon occurrence of a preset event. In this situation, the preset event may include, for example when a specific key on the remote controller 10 is selected; when a preset period arrives; or when one of keys on the remote controller 10 and keys on the broadcast display apparatus 200 is touched. Additionally, each of the plurality of identifiers may be represented by at least one of a number and a letter, and may be respectively assigned to the plurality of application windows according to the display position of the plurality of application windows. For example, if each of the plurality of identifiers is represented by a number, numbers may be assigned to each of the plurality of application windows either clockwise or counterclockwise, or sequentially from the top to the bottom of a display area or from the bottom to the top of the display area.

The controller 220 may control the display unit 210 to display the plurality of currently open application windows in a display pattern which enables a user to conveniently select one of the plurality of currently open application windows (for example, a horizontal display pattern or a vertical display pattern), upon occurrence of an event. Here, the display pattern of application windows may change while the plurality of identifiers are displayed, or after a predetermined time has elapsed after the plurality of identifiers are displayed.

The remote control signal receiver 230 receives a remote control signal from the remote controller 10. The remote controller 10 may comprise a plurality of keys (not shown) such as number keys and/or letter keys. Additionally, the remote controller 10 may transmit a control signal to the broadcast display apparatus 200 using a short-range wireless communication technology, such as infrared communication and/or Bluetooth communication. The remote controller 10 may also control the broadcast display apparatus 200 in a wired connection instead of a wireless connection under different circumstances.

When the preset event occurs, the plurality of identifiers displayed on the display unit 210 may be represented by at least one of letters and numbers to be input using the plurality of keys on the remote controller 10.

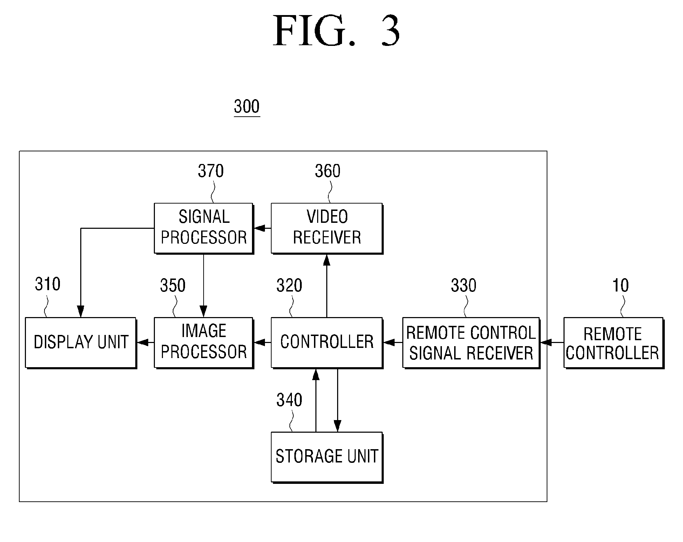

FIG. 3 is a detailed block diagram of a broadcast display apparatus 300. The broadcast display apparatus 300 of FIG. 3 comprises a display unit 310, a controller 320, a remote control signal receiver 330, a storage unit 340, a image processor 350, a video receiver 360 and a signal processor 370. The display unit 310, controller 320 and remote control signal receiver 330 are configured similarly to those described above with reference to FIGS. 1 and 2, so no further description is herein provided.

The display unit 310 displays a plurality of currently open application windows on a single screen.

The controller 320 controls the display unit 310 to display a plurality of identifiers corresponding to each of the plurality of application windows, upon occurrence of a preset event. In this situation, the preset event may occur, for example: when a specific key on the remote controller 10 is selected; when a preset period arrives; when one of keys on the remote controller 10 and keys on the broadcast display apparatus 300 is touched; when a currently viewed channel is changed; and when a predetermined time has not elapsed after the broadcast display apparatus 300 is powered on.

Additionally, the controller 320 may control the plurality of identifiers to be displayed on one area or one side of each of the plurality of currently open application windows

The remote control signal receiver 330 receives a remote control signal from the remote controller 10. The remote controller 10 may comprise a plurality of keys (not shown) such as number keys and/or letter keys. In more detail, the plurality of keys on the remote controller 10 may represent at least one of numbers, symbols, diagrams and languages.

Additionally, the remote controller 10 may comprise a selection key (not shown) to receive a user command to display the plurality of identifiers corresponding to each of the plurality of application windows. In this situation, when the preset event occurs, each of the plurality of identifiers displayed on the display unit 310 may be represented by at least one of a letter and a number to be input using the plurality of keys on the remote controller 10, and may be respectively assigned to the plurality of application windows according to the display position of the plurality of application windows. For example, if each of the plurality of identifiers is represented by a number, numbers may be assigned to each of the plurality of application windows either clockwise or counterclockwise.

If a user selects one of the number keys and/or one of the letter keys on the remote controller 10, the controller 320 may recognize that an application window identified by a number and/or letter corresponding to the selected key is selected, and may activate the application window.

According to another exemplary embodiment of the present invention, it is possible for a user to select a desired application window from among a plurality of application windows arranged in a predetermined direction (for example, a horizontal direction, a vertical direction or a diagonal direction) by adjusting the direction, even when identifiers corresponding to each of the plurality of application windows are not displayed. Here, the plurality of application windows may be arranged in the predetermined direction while the plurality of identifiers are displayed, or after a predetermined time has elapsed after the plurality of identifiers are displayed.

In this situation, if the user selects a desired application window by pressing a direction key which may be included on the remote controller 10 or the broadcast display apparatus 300 for more than a predetermined period of time, or by pressing a selection key, the controller 320 may control the display unit 310 to display the selected application window. Alternatively, if a predetermined period of time has elapsed after selecting the application window, the controller 320 may enable the selected application window to be activated.

Additionally, when the preset event occurs, the controller 320 may adjust at least one of a size, position and transparency of the plurality of application windows displayed on the display unit 310 and may arrange the plurality of application windows on the screen according to a preset pattern. In this situation, the size of the plurality of application windows may be set to be the same as or different from each other, and the position of the plurality of application windows may also be set to be changed variously.

For example, an application feature value set based on user preference for each application window, frequency of use of each application window, and a display attribute for each application window may be used to determine at least one of the display size and position of each application window. The feature value may be set based on a scenario of an application used by a user. The feature value may be set so that an application window having higher user preference and frequency of use than other application windows is assigned a larger display area than the other application windows.

The size and position of the display areas assigned to the plurality of application windows may be determined based on basic display information set in each application window or according to user definition, regardless of user environment at the time of entry of selection mode.

If a user selects one of the plurality of application windows after arrangement, or if a predetermined time has elapsed after arrangement, the controller 320 rearranges each of the plurality of application windows to an original position, namely to the user-defined position.

Additionally, after arranging the plurality of application windows in a preset pattern, the controller 320 displays a cursor on the plurality of arranged application windows, so that a user may move the cursor in a desired direction by manipulating direction keys on the remote controller 10 and direction keys on the broadcast display apparatus 300. The cursor may be a frame-shaped cursor or a blinking cursor, or may darken or lighten the application windows, so it is possible to distinguish an application window indicated by the cursor from other application windows. For example, a graphic input device (GID) cursor may be used to select an application window based on the widget type. The GID cursor for selecting an object displayed on the display unit 310 may be operated on the basis of a rollover function. The rollover function refers to the function of changing the color of an edge of the object and displaying a shade when the GID cursor is put on or is rubbed on the object on the display unit 310.

The controller 320 displays the plurality of application windows arranged in the present pattern so that the application window indicated by the cursor is distinguished from other application windows. In more detail, the controller 320 adjusts at least one of a size, position, transparency and brightness of the application window indicated by the cursor, or highlights only the application window indicated by the cursor, so that the application window indicated by the cursor is distinguished from other application windows.

Additionally, the controller 320 deletes an identifier corresponding to the application window selected by the cursor and allows other identifiers to remain on the screen. However, if another application window is selected, the controller 320 enables the deleted identifier to again appear on the corresponding application window.

The controller 320 magnifies the selected application window, and adjusts at least one of the position of other non-selected application windows and a display position of each of the identifiers so that the identifiers on the non-selected application windows are not covered, i.e., visually obstructed, by the magnified application window.

In this situation, each of the plurality of application windows may show thumbnail images representing currently running applications, or currently running applications.

An exemplary embodiment regarding the above situation will be described in detail with reference to the drawings that will be described later.

The storage unit 340 is a recording medium containing a program and information data required for the controller 320 to operate and control the broadcast display apparatus 300.

The storage unit 340 stores the plurality of identifiers corresponding to each of the plurality of application windows. The storage unit 340 also stores the preset pattern to display the plurality of application windows, for example information regarding at least one of a display position, size, transparency and brightness of the plurality of application windows. The storage unit 340 may be implemented as an electrically erasable programmable read-only memory (EEPROM) and/or a flash ROM.

The image processor 350 sets the plurality of application windows in various widget types, and provides the display unit 310 with the set application windows. In more detail, the image processor 350 processes the plurality of application windows in various types of widgets, for example icons, pull-down menus, buttons, selection boxes, check boxes, scroll bars, windows, toggle buttons, and/or forms. Additionally, the image processor 350 processes a screen for displaying a main video signal received from an external source and a picture-in-picture (PIP) screen for displaying another video within the main video in the form of widgets, and sends the processed screens to the display unit 310 under different circumstances.

According to the control of the controller 320, the image processor 350 adjusts at least one of a size, position, transparency and brightness of the plurality of application windows in the form of widgets, and transmits the plurality of application windows of which at least one of the size, position, transparency and brightness are adjusted to the display unit 310.

The video receiver 360 receives a broadcast signal via an antenna and/or cable, or receives a video signal from an external apparatus or external communication network, and sends the received broadcast signal or video signal to the signal processor 370.

The signal processor 370 converts the signal output from the video receiver 360 into a signal of a format capable of being processed by the display unit 310.

The signal processor 370 may comprise various elements required for signal processing, for example a decoder which decodes a composite video broadcast signal (CVBS) or an S-video signal, an analog-to-digital converter (ADC) which converts a received component signal or PC signal into a digital signal, or a transition minimized differential signaling (TMDS) receiver which divides a digital visual interface (DVI) signal into R, G, B digital signals and H/V signal.

Additionally, the signal processor 370 may comprise a scaler which converts the converted signal to match the vertical frequency, resolution, and screen ratio in accordance with the output standard of the display unit 310. In this situation, the display unit 310 displays the video signal processed by the signal processor 370 on a screen.

The video signal processed by the signal processor 370 may also be processed by the image processor 350, as described above, if necessary.

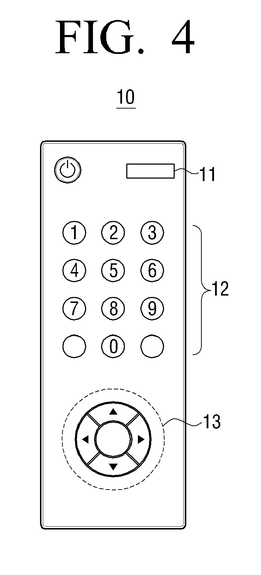

FIG. 4 exemplarily illustrates a remote controller 10 according to an exemplary embodiment of the present invention.

The remote controller 10 of FIG. 4 comprises a selection key 11, a number key or letter key portion 12 and a direction key portion 13. A remote controller according to anther exemplary embodiment of the present invention may comprise various keys other than those shown in FIG. 4, but the keys shown in FIG. 4 only are now described for convenience of description.

The selection key 11 enables the preset event according to the exemplary embodiment of the present invention to occur. For example, if a user presses the selection key 11, the plurality of identifiers corresponding to each of the plurality of application windows on the screen may be displayed, or the plurality of application windows may be arranged and displayed in the preset pattern.

The number key portion 12 comprises a plurality of number keys through which a user may input a selection signal to select an application window from among the plurality of application windows. For example, if a user presses number key 1, an application window to which identifier number '1' is added may be selected from among the plurality of application windows displayed on the screen. It should be noted that while the above example describes using a combination of keys, e.g., numbers and letters, to represent a unique identifier.

The direction key portion 13 comprises four direction keys through which a user may input a navigation signal to navigate the plurality of application windows arranged in the preset pattern according to the exemplary embodiment of the present invention. In other words, the user may navigate the plurality of application windows using left, right, up and down keys (►,◄,▲,▼) on the remote controller 10.

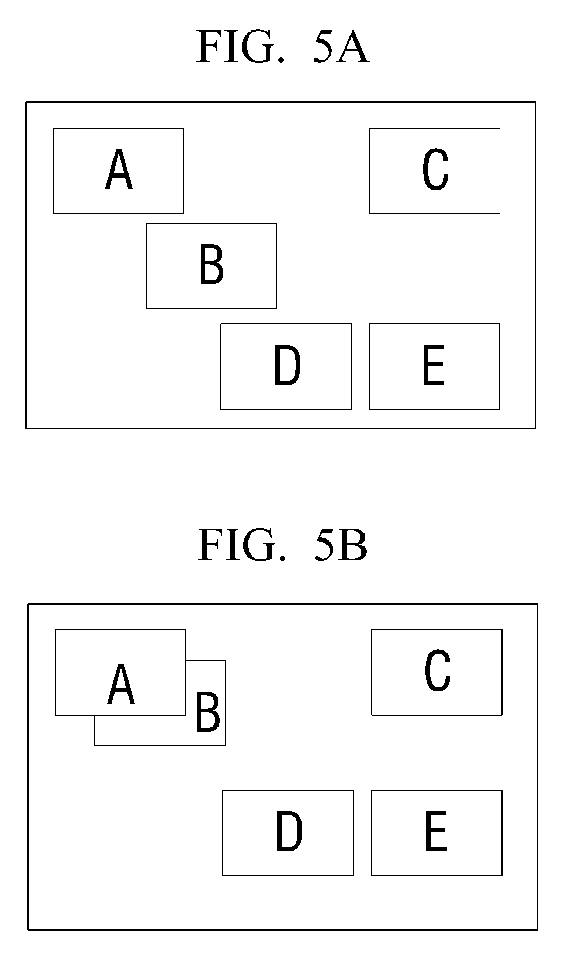

FIGS. 5A to 5C are views explaining various display patterns to be initially displayed on a display screen according to an exemplary embodiment of the present invention.

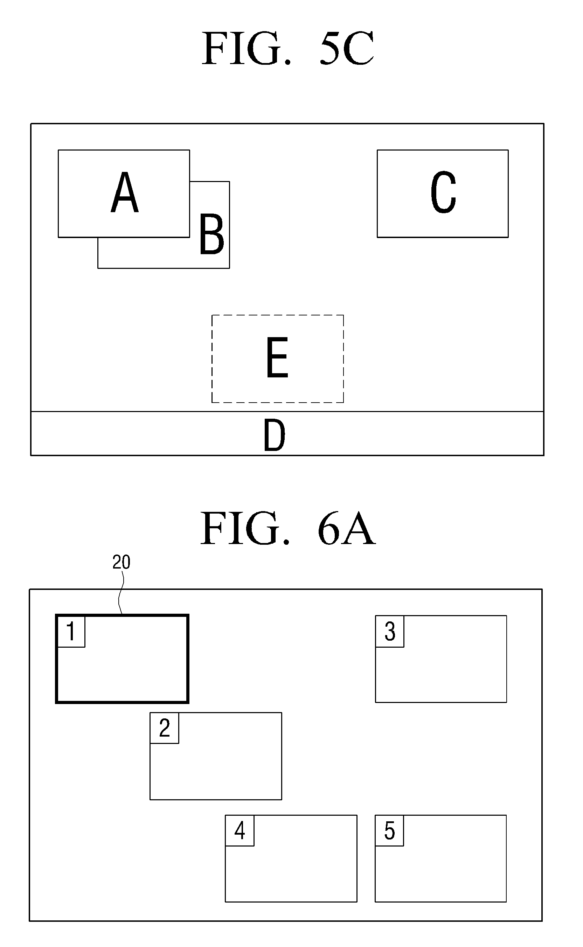

A screen shown in FIG. 5A displays a plurality of application windows A to E so that display areas assigned to the plurality of application windows A to E do not overlap one another, and a screen shown in FIG. 5B also displays a plurality of application windows A to E and display areas assigned to application windows A and B among the plurality of application windows A to E overlap one another. FIG. 5C exemplarily shows a screen on which a plurality of application windows A to E are displayed, display areas assigned to application windows A and B overlap one another, application window E (for example, an alarm widget) is currently running but not shown, and application window D is displayed in the form of a ticker.

FIGS. 6A to 6E are views explaining various display patterns to be provided upon occurrence of the preset event according to the exemplary embodiment of the present invention. In other words, various display patterns shown in FIGS. 6A to 6E may be obtained from a change in the display patterns shown in FIGS. 5A to 5C, when the preset event occurs.

Referring to FIG. 6A, when a plurality of application windows are displayed so that display areas assigned to the plurality of application windows do not overlap one another as shown in FIG. 5A, if the preset event occurs, identifier numbers 1 to 5 corresponding to each of the plurality of application windows may be displayed on one side of each of the plurality of application windows, without needing to arrange the plurality of application windows in the preset display pattern. In this situation, a user may select a desired application window by pressing one of the number keys corresponding to identifier numbers 1 to 5. The preset event has been described above, so no further description is herein provided.

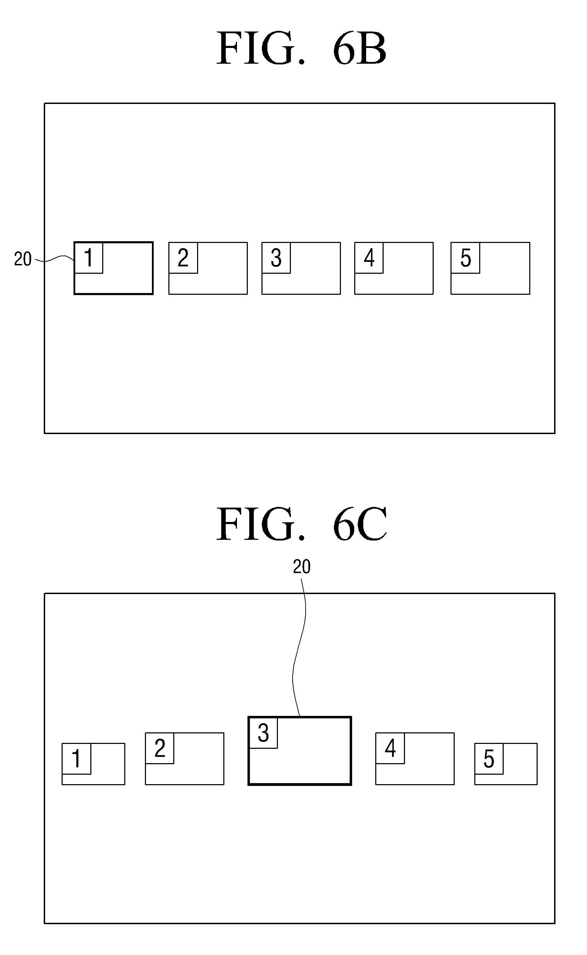

The display patterns shown in FIGS. 6B to 6E may be applied to the screens shown in FIGS. 5A to 5C.

Referring to FIG. 6B, a plurality of application windows having the same size are arranged in a line, upon occurrence of the preset event. Additionally, identifier numbers 1 to 5 are displayed on one side of each of the plurality of arranged application windows. In this situation, a user may select a desired application window by moving a cursor 20 using direction keys on a remote controller, or by pressing one of the number keys corresponding to identifier numbers 1 to 5.

Referring to FIG. 6C, a plurality of application windows having different size are arranged in a line, upon occurrence of the preset event. Additionally, identifier numbers 1 to 5 are displayed on one side of each of the plurality of arranged application windows. In this situation, an application window indicated by the cursor 20 is positioned in the center of the arrangement of the plurality of application windows, and occupies a larger display area than other application windows.

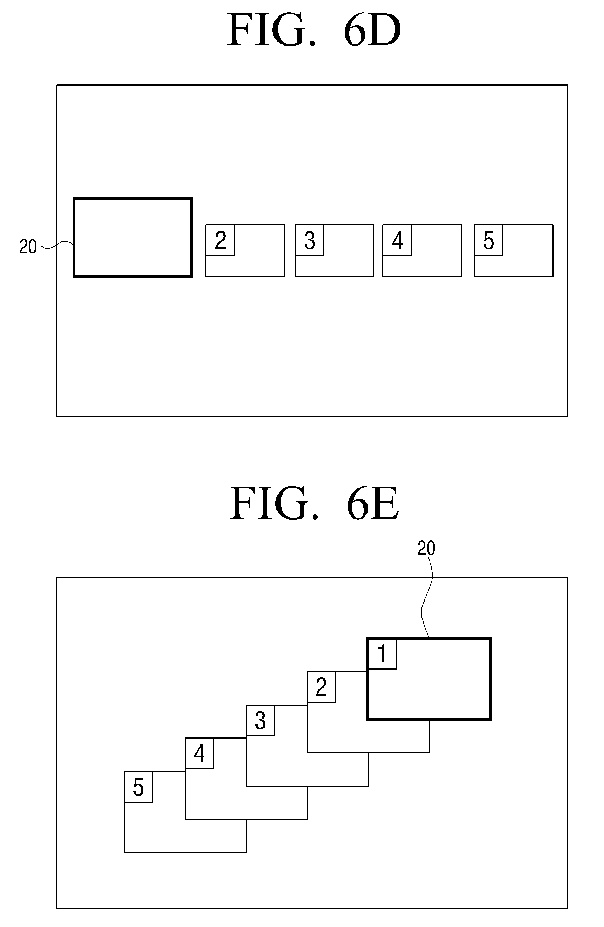

Referring to FIG. 6D, if a user moves the cursor 20 to the leftmost application window, the leftmost application window may be magnified so as to be distinguished from other application windows. In this situation, an identifier (for example, number '1') displayed on one side of the leftmost application window may be deleted. FIG. 6E exemplarily shows a display pattern in which display areas assigned to a plurality of application windows overlap one another.

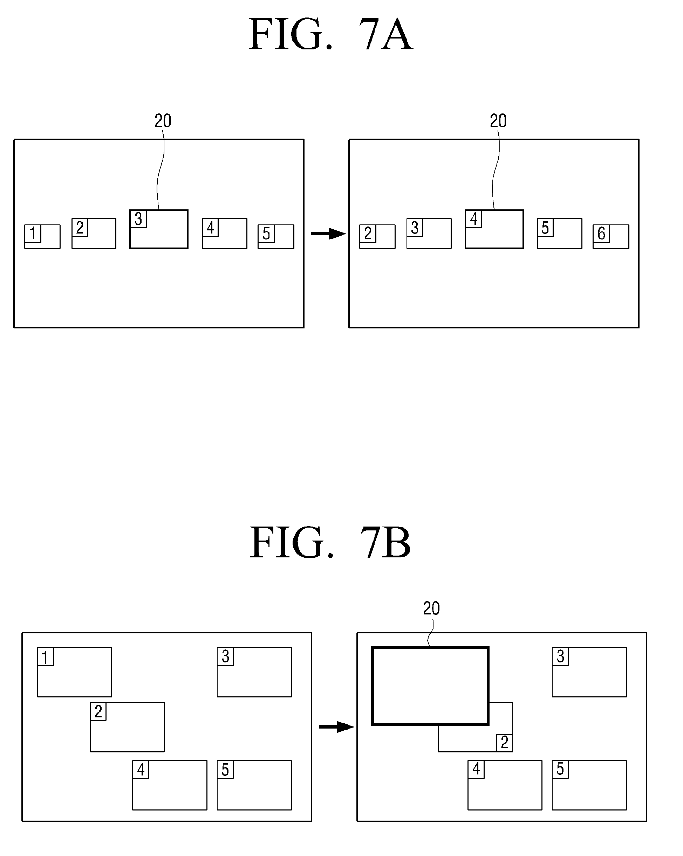

FIGS. 7A to 7C are views explaining display patterns according to another exemplary embodiment of the present invention.

Referring to FIG. 7A, when the cursor 20 currently indicates the application window with identifier number '3' as shown in FIG. 6C, if a user moves the cursor 20 to an application window with identifier number '4' using direction keys or number keys on a remote controller, the application window with identifier number '4' (namely, the selected application window) may be magnified and displayed in the center of the arrangement. Accordingly, it is possible to provide the user with visual feedback.

Referring to FIG. 7B, when a plurality of application windows are displayed as shown in FIG. 6A, if a user selects an application window with identifier number '1' by moving the cursor 20 using direction keys and/or number keys on a remote controller, the selected application window may be magnified and identifier number '1' may disappear from the screen. Additionally, identifier number '2' that has been placed on the upper left side of a corresponding application window may appear on the lower right side so as not to be covered, i.e., visually obstructed, by the magnified application window. In this situation, identifier numbers 3, 4, 5 may remain without any change.

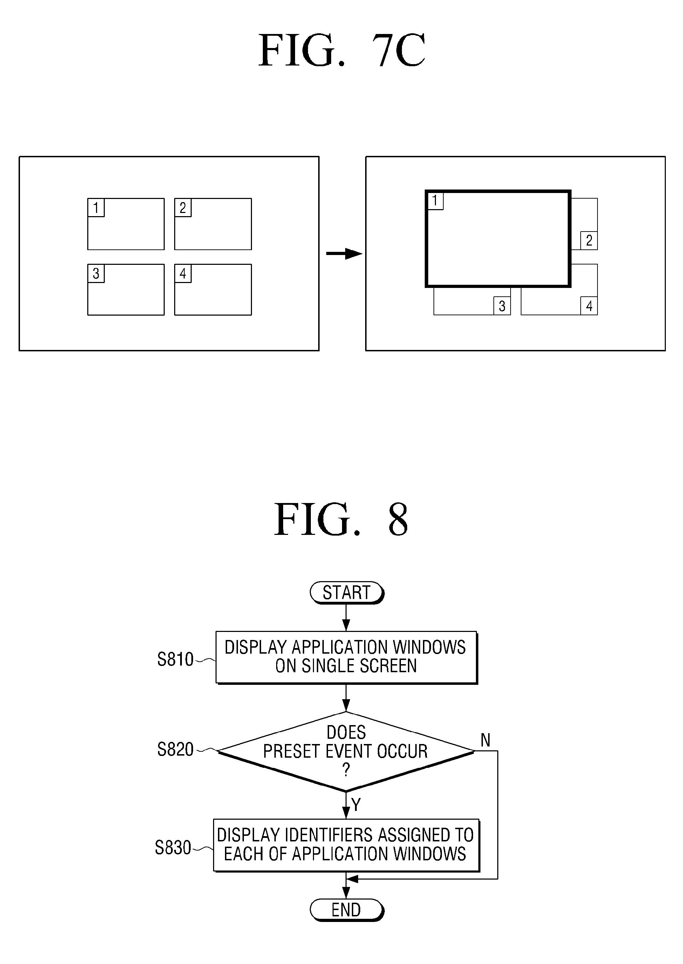

Referring to FIG. 7C, if a user selects an application window with identifier number '1' by moving a cursor using direction keys and/or number keys on a remote controller when a left screen of FIG. 7C is currently displayed, the selected application window may be magnified. Additionally, identifier numbers 2, 3, 4 that have been placed on the upper left side of corresponding non-selected application windows may be displayed on the lower right side so as not to be covered, i.e., visually obstructed, by the magnified application window. In this situation, identifier number '1' on the selected application window may disappear from the screen or may continue to be displayed.

FIG. 8 is a flowchart explaining a method for controlling a broadcast display apparatus according to an exemplary embodiment of the present invention.

According to the method for controlling the broadcast display apparatus of FIG. 8, a plurality of application windows are displayed on a single screen (S810), and identifiers assigned to each of the application windows are displayed if a preset event occurs (S820). In this situation, the preset event may occur, for example: when a specific key on the remote controller is selected; when a preset period arrives; when one of keys on the remote controller and keys on the broadcast display apparatus is touched; when a currently viewed channel is changed; and when a predetermined time has not elapsed after the broadcast display apparatus is powered on. Additionally, the plurality of application windows may take the form of widgets.

If it is determined that the preset event occurs (S820:Y), a plurality of identifiers assigned to each of the plurality of application windows are displayed (S830).

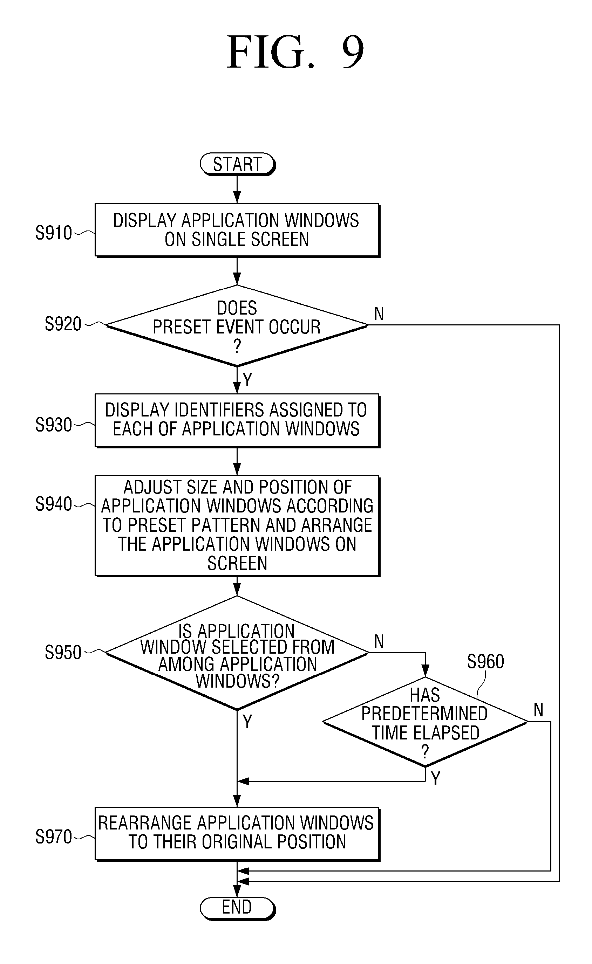

FIG. 9 is a flowchart explaining a method for controlling a broadcast display apparatus according to another exemplary embodiment of the present invention.

According to the method for controlling the broadcast display apparatus of FIG. 9, a plurality of application windows are displayed on a single screen (S910), and then determining whether a preset event occurs (S920).

If it is determined that the preset event occurs (S920:Y), a plurality of identifiers assigned to each of the plurality of application windows are displayed (S930). The plurality of identifiers may be represented by at least one of letters and numbers to be input using the plurality of keys on the remote controller, and may be respectively assigned to the plurality of application windows according to the display position of the plurality of application windows.

At least one of the size and position of the plurality of application windows are adjusted, and the plurality of application windows are arranged on the screen according to the preset pattern (S940). Here, the display pattern of application windows may be changed while the plurality of identifiers are displayed, or after a predetermined time has elapsed after the plurality of identifiers are displayed.

After operation S940, a cursor is displayed on the plurality of arranged application windows so that a user may move the cursor in a desired direction.

In this situation, an application window indicated by the cursor may be distinguished from other application windows, for example, by adjusting at least one of a size, position, transparency and brightness of the application window indicated by the cursor or by highlighting the application window indicated by the cursor.

Additionally, if a number key and/or letter key on the remote controller is selected, an application window corresponding to the selected key is added as an identifier may be considered to be selected.

Furthermore, an identifier appearing on the selected application window may be deleted from the screen, but identifiers appearing on other non-selected application windows may remain on the screen.

Moreover, the selected application window may be magnified, and at least one of the position of non-selected application windows and the display position of each of the identifiers may be adjusted so that the identifiers on the non-selected application windows may not be covered, i.e., visually obstructed, by the magnified application window.

Subsequently, if an application window is selected from among the plurality of application windows (S950:Y), each of the plurality of application windows is rearranged to an original position (S970).

If a predetermined time has elapsed (S960:Y) even when there is no selection of the plurality of application windows (S950:N), each of the plurality of application windows is rearranged to an original position (S970).

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast display apparatus comprising:
a display unit which simultaneously displays a plurality of application windows on a single screen; and
a controller which controls a plurality of identifiers, assigned respectively to each of the plurality of application windows, to be displayed.

2. The broadcast display apparatus as claimed in claim 1, wherein the controller adjusts at least one of a size and position of the plurality of application windows and arranges the plurality of application windows on the screen according to a preset pattern.

3. The broadcast display apparatus as claimed in claim 1 or 2, further comprising:
a remote control signal receiver which receives a remote control signal from a remote controller containing a plurality of keys,
wherein each of the plurality of identifiers is represented by at least one of a number and a letter which correspond to each of the plurality of keys.

4. The broadcast display apparatus as claimed in claim 3, wherein the controller adjusts at least one of a size and position of the plurality of application windows and arranges the plurality of application windows on the screen according to a preset pattern upon occurrence of a preset event, and
wherein if one of a predetermined time has elapsed and an application window is selected from among the plurality of application windows, , the controller rearranges each of the plurality of application windows to an original position.

5. The broadcast display apparatus as claimed in claim 4, wherein, after arranging the plurality of application windows in the preset pattern, the controller displays a cursor on the plurality of arranged application windows so that a user is able to move the cursor in a desired direction.

6. The broadcast display apparatus as claimed in claim 5, wherein the controller controls an application window indicated by the cursor to be displayed distinctively from other application windows among the plurality of application windows arranged in the preset pattern.

7. The broadcast display apparatus as claimed in claim 3 to 6, wherein, if one of a number key and a letter key on the remote controller is selected, the controller recognizes that an application window corresponding to the selected key is added as an identifier has been selected.

8. The broadcast display apparatus as claimed in claim 1 to 7, wherein the controller controls the plurality of identifiers to be displayed according to a display position of the plurality of application windows.

9. The broadcast display apparatus as claimed in claim 1 to 8, wherein the plurality of application windows are widget windows.

10. A method for controlling a broadcast display apparatus, the method comprising:
displaying simultaneously a plurality of application windows on a single screen; and
displaying a plurality of identifiers assigned to each of the plurality of application windows.

11. The method as claimed in claim 10, further comprising:
adjusting at least one of a size and position of the plurality of application windows and arranging the plurality of application windows on the screen according to a preset pattern.

12. The method as claimed in claim 10 or 11, further comprising:
receiving a remote control signal from a remote controller containing a plurality of keys,
wherein each of the plurality of identifiers is represented by at least one of a number and a letter which correspond to each of the plurality of keys.

13. The method as claimed in claim 10 to 12, further comprising:
adjusting at least one of a size and position of the plurality of application windows and arranging the plurality of application windows on the screen according to a preset pattern upon occurrence of a preset event; and
rearranging each of the plurality of application windows to an original position, if one of a predetermined time has elapsed and an application window is selected from among the plurality of application windows.

14. The method as claimed in claim 13, further comprising:
after arranging the plurality of application windows in the preset pattern, displaying a cursor on the plurality of arranged application windows so that a user is able to move the cursor in a desired direction.

15. The method as claimed in claim 14, further comprising:
displaying an application window indicated by the cursor distinctively from other application windows among the plurality of application windows arranged in the preset pattern.
